# EUROPEAN PATENT SPECIFICATION

(11) **EP 3 762 626 B1**
(45) Date of publication and mention of the grant of the patent: **10.05.2023**
(21) Application number: 19709025.1
(22) Date of filing: 04.03.2019
(51) Int. Cl.: F16F 13/10, B60K 5/12, F16F 1/38

(54) **ANTI-VIBRATION DEVICE COMPRISING A DAMPING UNIT, THE DAMPING UNIT AND A METHOD OF MAKING THE ANTI-VIBRATION DEVICE**
SCHWINGUNGSDÄMPFER MIT DÄMPFUNGSEINHEIT, DÄMPFUNGSEINHEIT UND VERFAHREN ZUR HERSTELLUNG DES SCHWINGUNGSDÄMPFERS
DISPOSITIF ANTI-VIBRATION COMPRENANT UNE UNITÉ D'AMORTISSEMENT, L'UNITÉ D'AMORTISSEMENT ET PROCÉDÉ DE FABRICATION DU DISPOSITIF ANTI-VIBRATION

(30) Priority: 05.03.2018 FR 1851868
(43) Date of publication of application: 13.01.2021
(73) Proprietor: Vibracoustic Nantes SAS, 44470 Carquefou (FR)
(72) Inventor: DOUILLARD, Sébastien, 44470 Carquefou (FR); RAULT, Alexandre, 44300 Nantes (FR); CHAUVET, Ludovic, 44470 Mauves-sur-Loire (FR)
(74) Representative: Patentanwälte Olbricht Buchhold Keulertz
(86) International application number: PCT/EP2019/055350
(87) International publication number: WO 2019/170621

(56) References cited:
- EP-A1- 1 359 342
- EP-A1- 2 113 676
- EP-A1- 2 150 721
- WO-A1-02/095259
- WO-A1-2011/148576
- FR-A1- 2 809 996
- JP-B2- 4 088 970

## Description

### TECHNICAL DOMAIN

This invention relates to an anti-vibration device comprising a damping unit, and more particularly an anti-vibration device configured for the installation of an engine on a vehicle body. The invention further refers to said damping unit and a method for manufacturing the anti-vibration device.

### TECHNOLOGICAL BACKGROUND

Document EP 2 150 721 B2 discloses an anti-vibration device for the assembly of an engine on a vehicle body, comprising an anti-vibration unit comprising a first stiffener assembled to a second stiffener by means of an elastomer body capable of deforming at least along a main vibration axis, and a support with at least one slide comprising two grooves extending along an insertion direction substantially perpendicular to the main vibration axis, the first stiffener comprising two ribs configured to cooperate in sliding with two grooves along the insertion direction.

However, according to this document, the anti-vibration unit is attached to the support by clip fitting, which requires that elastic clip fitting means be made available on the anti-vibration unit or on the support. These elastic clip fitting means may make manufacturing more complicated and may subsequently lead to additional costs. They also limit the choice of available materials to make the anti-vibration unit and/or the support. Furthermore, the strength of elastic clip fitting means is limited, such that they cannot usually satisfy the most recent specifications of OEMs (Original Equipment Manufacturers). Therefore there is a need for a new type of anti-vibration device.

Further state of the art documents are EP 2 113 676 A1, WO 02/095 259 A1 and JP 4 088 970 B2, which also show anti-vibration devices for the assembly of an engine on a vehicle body, comprising a damping unit and a support.

### PRESENTATION

This disclosure relates to an anti-vibration device according to the claim 1, a damping unit according to the claim 11 and a method of making an anti-vibration device according to the claim 15.

It is understood that the anti-vibration device comprises the attachment element, before attachment of the support and the damping unit. Therefore the attachment element is part of the damping unit, or of the support. The tool is capable of displacing the attachment element from a position in which it does not couple the damping unit and the support, towards the attachment housing so that it will be partly inserted in it, in a position in which it couples the damping unit and the support. Thus, there is no need to add on a structural element distinct from the anti-vibration device to fix the support and the attachment unit together. The method of assembling the anti-vibration device is thus simplified.

After having been moved by the tool, it can be understood that a portion of the attachment element is placed in the first attachment housing of the support and that a second portion is coupled to the damping unit, so as to block movement of the damping unit relative to the support along the insertion direction.

Due to this anti-vibration device, that does not include elastic clip-fitting means, the assembly and attachment of the anti-vibration unit and the support is facilitated because the attachment element can easily be placed between the damping unit and the support, possibly automatically. Therefore costs are reduced. It is also possible to choose any sort of material for the support in that elastic clip-fitting means are no longer necessary. Furthermore, this vibration device has better resistance, so that OEM manufacturers' specifications can be better satisfied.

The attachment element is held in place by a breakable retaining element before being moved by the tool.

Thus, the attachment element is part of the support or the damping unit. By applying pressure on the attachment element, the tool can break the breakable retaining element so as to release the attachment element so that it can be moved towards the first attachment housing. Thus, the attachment element is fixed to the damping unit or the support during the assembly of these two elements. Therefore the number of parts to be manipulated during the assembly is reduced and the attachment element is automatically positioned relative to the damping unit or the support before the tool is used, which facilitates assembly operations.

In some embodiments, the damping unit comprises at least one second attachment housing into which at least part of the attachment element fits.

In some embodiments, the attachment element is free to move between an assembly position and an attachment position, the attachment element is positioned only in the second attachment housing in the assembly position and the attachment element being positioned partly in the first attachment housing and partly in the second attachment housing in the attachment position.

For example, in the assembly position, the attachment element is retained by the breakable retaining element in the second attachment housing.

In some embodiments, the attachment element is a pin extending along the main vibration direction.

In some embodiments, the at least one portion of the attachment element inserted in the first attachment housing is plastically deformed by pressure when it is inserted into the first attachment housing. Thus, the attachment element is retained in the first attachment housing along the main vibration direction by friction.

In some embodiments, the support comprises a through hole extending along the main vibration direction through which the tool can be inserted so as to displace the attachment element towards the first attachment housing.

In some embodiments, the attachment housing and the through hole are in line along the main vibration direction.

In some embodiments, the length of the attachment element is more than the depth of the first attachment housing along the main vibration direction.

This presentation also relates to a method of manufacturing an anti-vibration device, including the following steps: introduce a damping unit in a support along an insertion direction until a first support attachment housing of the support and a second attachment housing of the damping unit are in line along a main vibration direction; insert a tool in the second attachment housing so as to apply pressure on and to displace an attachment element located in the second attachment housing, until the attachment element is partially inserted in the first attachment housing so as to block movement of the damping unit relative to the support along the insertion direction.

In some embodiments, the method of manufacturing an anti-vibration device also comprises the following step: introducing the tool into a through hole in line with the second attachment housing along the main vibration direction, to apply pressure on and to displace the attachment element until the attachment element is partially inserted in the first attachment housing so as to block movement of the damping unit relative to the support along the insertion direction, wherein the attachment element is held in place by a breakable retaining element until pressure is applied on the attachment element, wherein the tool can break the breakable retaining element to release the attachment element so that it can be moved towards the first attachment housing.

In some embodiments, the method of manufacturing an anti-vibration device also includes the following step: applying pressure on the attachment element through the through hole until the retaining element breaks.

This presentation also relates to a damping unit for an anti-vibration device for the installation of an engine on a vehicle body. The damping unit can be combined with any one of the characteristics described in this disclosure.

The damping unit comprises a (first) guide element configured to guide the damping unit along an insertion direction in a support of the anti-vibration device; the damping unit being configured to dampen the vibrations along at least one main vibration direction perpendicular to the insertion direction; the damping unit comprising an attachment element held in place by a breakable retaining element configured to be moved by a tool so as to cooperate with a (first) attachment housing of the support and to block a movement of the damping unit relative to the support along the insertion direction.

In some embodiments, the attachment element is configured to be displaced by a tool along the main vibration direction.

In some embodiments, the attachment element is positioned and/or retained in a (second) attachment housing.

The breakable retaining element is formed by at least one breakable strip or by at least two breakable meniscuses, configured to fix the attachment element to an internal wall of the second attachment housing. In some embodiments, the first guide element comprises at least one slide extending along the insertion direction substantially perpendicular to the main insertion direction.

In some embodiments, the attachment element, the breakable retaining element, the second attachment housing and the first guide element are formed together, for example in a single moulding step.

In some embodiments, the attachment element comprises a projecting portion with a dimension perpendicular to the main vibration direction (i.e. a cross section) larger than a dimension perpendicular to the main vibration direction (i.e. a cross section) of the rest of the attachment element.

In some embodiments, the second attachment housing comprises an upper portion, a centring portion and an attachment portion, arranged in this order along the main vibration direction.

In some embodiments, the upper portion has a dimension perpendicular to the main vibration direction (i.e. a cross section) larger than the dimension perpendicular to the main vibration direction (i.e. a cross section) of the projecting portion of the attachment element.

In some embodiments, the attachment portion has a dimension perpendicular to the main vibration direction (i.e. a cross section) smaller than the dimension perpendicular to the main vibration direction (i.e. a cross section) of the projecting portion of the attachment element.

The disclosure also relates to a support for an anti-vibration device for the installation of an engine on a vehicle body. The support can be combined with any one of the characteristics described in this disclosure.

In some embodiments, the support comprises a (second) guide element configured to cooperate with a (first) guide element of a damping unit so as to guide the damping unit in the support along the insertion direction and a (first) attachment housing configured to cooperate with an attachment element of the damping unit so as to block movement of the damping unit relative to the support along the insertion direction.

In some embodiments, the (first) attachment housing extends along the main vibration direction.

In some embodiments, the (second) guide element comprises a groove extending along the insertion direction. The at least one slide of the damping unit is configured to engage in the groove so as to introduce the damping unit into the support.

In some embodiments, the second guide element comprises the (first) attachment housing and the through hole, the (first) attachment housing and the through hole being in line along the main vibration direction.

In some embodiments, the groove in the second guide element is defined between an upper rib and a lower rib.

In some embodiments, the through hole is formed in the upper rib.

In some embodiments, the first attachment housing is formed in the lower rib.

This presentation also relates to an assembly comprising a damping unit according to any one of the embodiments described in this presentation and a support according to any one of the embodiments described in this presentation.

### BRIEF DESCRIPTION OF THE DRAWINGS

The presentation and its advantages will be better understood after reading the following detailed description of different embodiments of the presentation given as non-limitative examples. This description refers to the appended pages of figures on which:
- figure 1 is a front view of the anti-vibration device according to one embodiment;
- figure 2 is a view similar to figure 1, showing only the support according to this embodiment;
- figure 3 is a bottom view of the anti-vibration device according to this embodiment, along direction III in figure 1;
- figure 4 is a sectional view in plane C-C in figure 3;
- figure 5 is an enlargement of zone D in figure 4;

### DETAILED DESCRIPTION

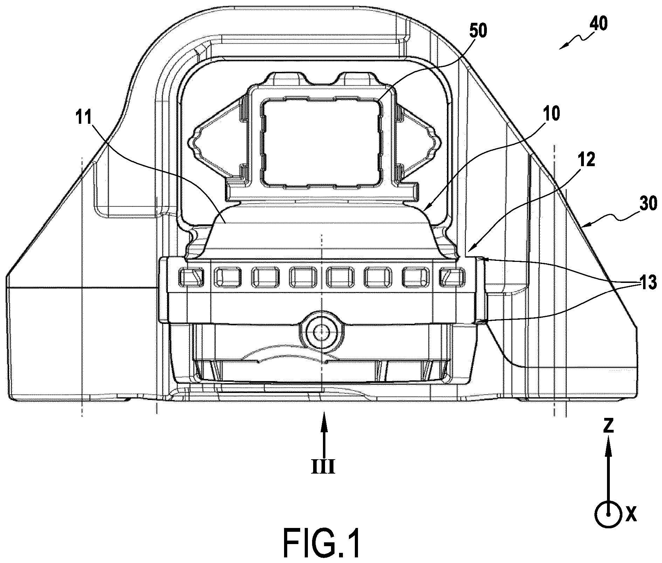

Figure 1 is a front view of the anti-vibration device 40 according to one embodiment. The anti-vibration device 40 is adapted for the installation of an engine (not shown) on the body (not shown) of a vehicle, particularly along a main vibration direction Z. Thus, the anti-vibration device 40 comprises a damping unit 10 connecting a support 30 to a core 50, the support 30 being connected to the body, and the core 50 being connected to the engine.

The damping unit 10, the construction of which is fairly similar to the construction of known hydrodynamic damping units, comprises an elastic body 11 and a first guide element 12 configured to guide the damping unit 10 in the support 30. The first guide element 12 comprises two slides 13 extending along an insertion direction X, and an attachment unit 14 configured to block the movement of the damping unit 10 relative to the support 30 along the insertion direction X. The attachment unit 14 extends perpendicular to the insertion direction, between the slides 13.

The attachment unit is preferably formed with the slides 13. The attachment unit 14 comprises at least one attachment housing 15 extending along a main vibration direction Z and an attachment element 16.

The support 30 comprises a baseplate 31, an upright 32 and a second guide element 33. The upright 32 is arranged on the baseplate 31, the support 30 having an opening on at least one side.

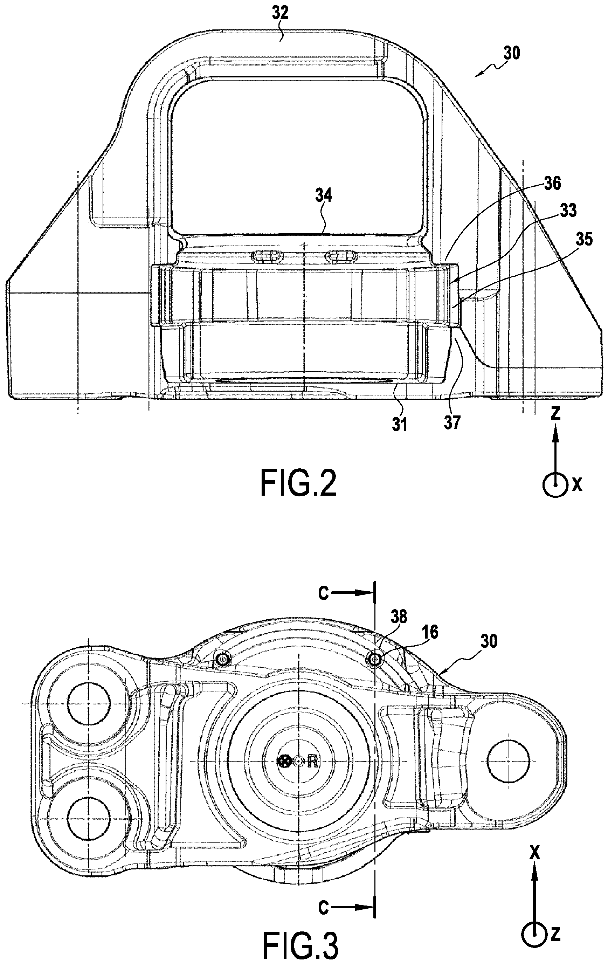

Figure 2 shows the support 30 without the damping unit 10. Figure 3 shows a top view of the anti-vibration device. The second guide element 33 is configured to retain the damping unit 10 along at least two directions, and preferably along three directions.

The second guide element 33 comprises a groove 35 extending along an internal wall of the support 30. The groove 35 is formed by an upper rib 36 and a lower rib 37.

The upper rib 36 of the second guide element 33 comprises at least one through hole 38. When the damping unit 10 is in position in the support 30, the upper rib 36 covers the attachment unit 14. The through hole 38 is then necessary to enable access to the attachment housing 15. The lower rib 37 comprises at least one attachment housing 39, that can also be called the "first attachment housing". The first attachment housing 39 is aligned with, and/or is concentric with, the through hole 38 along the main vibration direction Z. When the damping unit 10 is fully inserted into the support 30, the attachment housing 15, that can also be called the "second attachment housing" is in line with the through hole 38 and the first attachment housing 39. Thus a tool, for example an elongated rod, can be inserted in the second attachment housing 15 through the through hole 38, and can apply pressure on an attachment element 16, located in the second attachment housing 15. Thus, the attachment element 16 can be displaced and/or pushed in the first attachment housing 39.

According to one variant, the upper rib 36 can extend only along the insertion direction. Thus, the upper rib 36 does not cover the attachment unit 14 and there is no need to form a through hole in the upper rib 36.

When the damping unit 10 is inserted in the support 30, the first guide element 12 is engaged by contact with the second guide element 33. Thus, the damping element 10 is retained in the support 30 by the slides 13, the slides 13 being engaged between the upper rib 36 and the lower rib 37.

Furthermore, the second guide element 33 comprises a stop 34 along the insertion direction X to position the damping unit 10 in the support 30. When the damping unit 10 is stopped in contact with the stop 34, the second attachment housing 15 of the damping unit 10 is in line with and/or is concentric with the through hole 38 and the first attachment housing 39 of the support, along the main vibration direction Z.

By applying pressure on the attachment element 16 through the through hole 38 along the main vibration direction Z towards the first attachment housing 39, the attachment element 16 is moved so as to be partly positioned in the attachment housing 39 so as to block movement of the damping unit 10 relative to the support 30 along the insertion direction X.

The damping unit 10 is then blocked in the support 30 along the main vibration direction Z by the second guide element 33 and blocked in the support 30 along the insertion direction X by the attachment element 16.

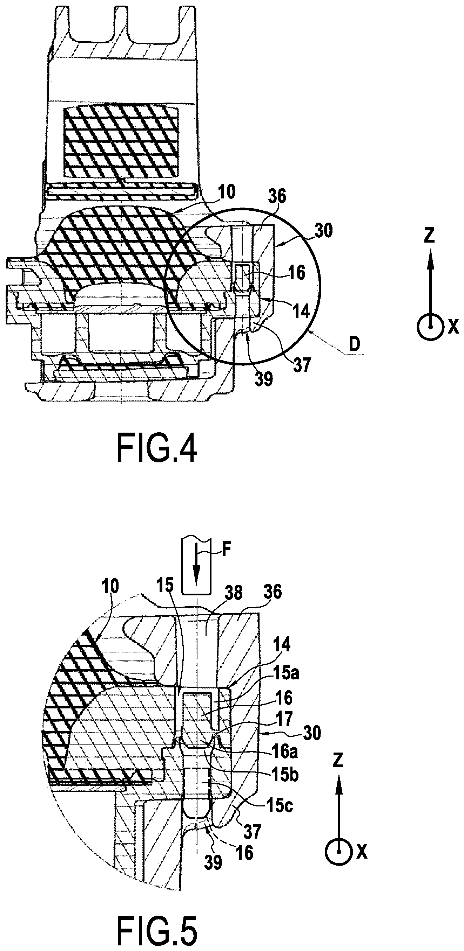

Figures 4 and 5 show the attachment unit 14, comprising the second attachment housing 15 extending along the main vibration direction Z. The attachment element 16 is positioned in the second attachment housing 15 in an assembly position. In the assembly position, the attachment element 16 is shown in figure 5 as a solid line. The attachment element 16 is in the form of a cylindrical pin extending along the main vibration direction Z. The dimension of the attachment element 16 perpendicular to the main vibration direction 2 is substantially constant. However, the attachment element 16 may include a projecting portion 16a. The dimension of the projecting portion 16a perpendicular to the main vibration direction Z is larger than the rest of the attachment element 16, called the "attachment element body". The projecting portion 16a in the second attachment housing 15 is positioned on one side of the second attachment housing 15 close to the first attachment housing 39.

The attachment element 16 is retained in the second attachment housing 15 by a breakable retaining element, in an assembly position. The breakable retaining element 17 is configured to fix and/or hold and/or retain the attachment element 16 to the internal wall of the second attachment housing 15. The breakable retaining element 17 is for example formed from a breakable band, and preferably by at least two breakable meniscuses 18. However, any breakable retaining element adapted to retain the attachment element 16 in the second attachment housing 15 may be used.

The second attachment element 15 comprises an upper portion 15a, a centring portion 15b and an attachment portion 15c. The dimension of the upper portion 15a perpendicular to the main vibration direction Z is larger than the dimension of the attachment element 16 perpendicular to the main vibration direction Z. The dimension perpendicular to the main vibration direction Z of the through hole 38 is substantially equal to the dimension perpendicular to the main vibration direction Z of the upper portion 15a. When the damping unit 10 is positioned in the support 30, the upper portion 15a of the second attachment housing 15 is positioned facing and close to the through hole 38 in the upper rib 36. The breakable retaining unit 17 is positioned in the upper portion 15a of the second attachment housing 15.

The dimension of the centring portion 15b perpendicular to the main vibration direction Z is gradually reduced moving towards the attachment portion 15c and the first attachment housing 39. In this case, the centring portion 15b is generally in the shape of a funnel. The centring portion 15b is positioned between the upper portion 15a and the attachment portion 15c along the main vibration direction Z. The largest diameter of the centring portion 15b is substantially equal to the diameter of the projecting portion 16a of the attachment element 16. The smallest diameter of the centring portion 15b is substantially equal to the diameter of the attachment portion 15c. When the attachment element 16 is moved towards the first attachment housing 39, the breakable retaining element 17 is broken under the effect of pressure applied by the tool on the attachment element 16, and the centring portion 15b guides the attachment element 16 towards the first attachment housing 39, due to its dimension perpendicular to the main vibration direction Z that is gradually reduced moving towards the attachment portion 15c and the first attachment housing 39. The attachment element 16 is thus centred in the second attachment housing 15.

The dimension of the attachment portion 15c perpendicular to the main vibration direction Z is less than or equal to the diameter of the body of the attachment element 16. When the damping unit 10 is positioned in the support 30, the attachment portion 15c of the second attachment housing 15 is positioned facing and close to the first attachment housing 39 in the upper rib 37. The dimension perpendicular to the main vibration direction Z of the attachment portion 15c is substantially equal to the dimension perpendicular to the main vibration direction Z of the first attachment housing 39.

Preferably, the length of the attachment element 16 is more than the depth of the first attachment housing 39 along the main vibration direction Z so as to block the damping unit 10 in the support 30. Therefore when the attachment element is in an attachment position, a portion of the attachment element 16 will remain in the second attachment housing 15.

The core 50 and the support 30 are made of metal. The elastic body 11 is made of an elastic material. The first guide element 12 including the first attachment unit 14 can be manufactured in one, and preferably only one, moulding step.

In order to assembly the anti-vibration device 40, the damping unit 10 slides in the support 30 along the insertion direction X, and the first guide element 12 of the damping unit 10 is guided by the second guide element 33 of the support 30. The damping unit 10 slides in the support 30 until the damping unit 10 stops in contact with the stop 34. Thus, the through hole 38, the second attachment housing 15 and the first attachment housing 39 are in line with each other along the main vibration direction Z. In this case, the attachment element 16 is in the assembly position, positioned and retained in the second attachment housing 15.

The tool is then inserted in the second attachment housing 15 through the through hole 38 so as to apply pressure on the attachment element 16. Thus, the breakable retaining element 17 breaks, the attachment element 16 then moves towards the centring portion 15b and is centred by the centring portion 15b of the second attachment housing 15. Since the dimension perpendicular to the main vibration direction Z of the projecting portion 16a of the attachment element 16 is larger than the dimension perpendicular to the main vibration direction Z of the attachment portion 15c of the second attachment housing 15, the projecting portion is plastically deformed when it is inserted in the attachment portion 15c.

Then, the attachment element 16 is moved further, partially into the first attachment housing 39. Due to dimensional constraints of the attachment element 16 relative to the attachment portion 15c and the first attachment housing 39, the attachment element 16 is engaged is engaged by friction due to the attachment profile 16c in the attachment housing 39, that thus retains the attachment element 16 in the main vibration direction Z.

When the attachment element 16 is partially positioned in the first attachment housing 39 and partially positioned in the second attachment housing 15, the attachment element 16 is in the attachment position. The attachment element 16 in its attachment position is shown in dashed lines in figure 5. Movement of the shock absorbing unit 10 relative to the support 30 along the insertion direction X is thus blocked.

Therefore the tool can displace the attachment element 16 from the assembly position to the attachment position. Movement of the tool along the main vibration direction Z is represented by the arrow in figure 5.

According to one variant, in the assembly position, the attachment element can be positioned and for example retained by a breakable retaining element in the through hole 38, instead of the second attachment housing 15. In this case, the tool would be inserted in the through hole 38 and would displace the attachment element 16 from the through hole to the second attachment housing 15, then the first attachment housing 39.

Although this invention has been described with reference to specific embodiments, it is obvious that modifications and changes can be made on these examples without going outside the general framework of the invention as defined in the claims. In particular, individual characteristics of the different illustrated/mentioned embodiments can be combined in additional embodiments. Consequently, the description and the drawings should be considered as being illustrative rather than restrictive.

It is also obvious that all characteristics described with reference to a process can be transposed alone or in combination with a device, and vice versa, all characteristics described with reference to a device can be transposed alone or in combination with a process.

## Claims

1. Anti-vibration device (40) for the installation of an engine on a vehicle body, comprising a damping unit (10) and a support (30); the damping unit (10) comprising a first guide element (12) configured to guide the damping unit (10) along an insertion direction (X) into the support (30), the damping unit (10) being configured to dampen vibrations along at least one main vibration direction (Z) perpendicular to the insertion direction (X); the support (30) comprising a first attachment housing (39) extending along the main vibration direction (Z), the anti-vibration device (40) comprising at least one attachment element (16) configured to be moved along the main vibration direction (Z) towards the first attachment housing (39) using a tool; the first attachment housing (39) being configured to hold a portion of the attachment element (16) so as to block the movement of the damping unit (10) relative to the support (30) along the insertion direction (X), **characterized in that** the attachment element (16) is held in place by a breakable retaining element (17) before being moved by the tool.

2. Anti-vibration device (40) according to claim 1, wherein the damping unit (10) comprises at least one second attachment housing (15) configured to at least partially hold the attachment element (16).

3. Anti-vibration device (40) according to claim 2, wherein the attachment element (16) is free to move between an assembly position and an attachment position, the attachment element (16) is positioned only in the second attachment housing (15) in the assembly position and the attachment element (16) being positioned partly in one and the other of the first attachment housing (39) and second attachment housing (15) in the attachment position.

4. Anti-vibration device (40) according to one of claims 1 and 3, wherein the attachment element (16) is a pin extending along the main vibration direction (Z).

5. Anti-vibration device (40) according to one of claims 1 and 3, wherein the portion of the attachment element (16) configured to be inserted into the first attachment housing (39) is plastically deformed by pressure when it is inserted into the first attachment housing (39).

6. Anti-vibration device (40) according to one of claims 1 and 5, wherein the support (30) comprises a through hole (38) extending along the main vibration direction (Z) through which the tool can be inserted so as to displace the attachment element (16) towards the first attachment housing (39).

7. Anti-vibration device (40) according to claim 6, wherein the attachment housing (39) and the through hole (38) are in line along the main vibration direction (Z).

8. Anti-vibration device (40) according to any of the claims 2 to 7, wherein the second attachment housing (15) comprises an upper portion (15a), a centring portion (15b) and an attachment portion (15c), arranged in this order along the main vibration direction (Z).

9. Anti-vibration device (40) according to claim 8, wherein the upper portion (15a) has a dimension perpendicular to the main vibration direction (Z) larger than the dimension perpendicular to the main vibration direction (Z) of a projecting portion (16a) of the attachment element (16).

10. Anti-vibration device (40) according to claims 8 or 9, wherein the attachment portion (15c) has a dimension perpendicular to the main vibration direction (Z) smaller than the dimension perpendicular to the main vibration direction (Z) of the projecting portion (16a) of the attachment element (16).

11. A damping unit (10), comprising a first guide element (12) configured to guide the damping unit (10) along an insertion direction (X) in a support (30) of an anti-vibration device (40); the damping unit (10) being configured to dampen vibrations along at least one main vibration direction (Z) perpendicular to the insertion direction (X); the damping unit (10) comprising an attachment element (16) held in place by a breakable retaining element (17) configured to be moved by a tool so as to cooperate with a first attachment housing (39) of the support (30) and to block a movement of the damping unit (10) relative to the support (30) along the insertion direction (X), **characterized in that** the breakable retaining element (17) is formed by at least one breakable strip or by at least two breakable meniscuses (18), configured to fix the attachment element (16) to an internal wall of the second attachment housing (15).

12. Damping unit (10) according to claim 11, wherein, the first guide element (12) comprises at least one slide (13) extending along the insertion direction (X) substantially perpendicular to the main insertion direction (X).

13. Damping unit (10) according to any of the claims 11 or 12, wherein, the attachment element (16), the breakable retaining element (17), and the first guide element (12) are formed together in a single moulding step.

14. Damping unit (10) according to any of the claims 11 to 13, wherein the attachment element (16) comprises a projecting portion (16a) with a dimension perpendicular to the main vibration direction (Z) larger than a dimension perpendicular to the main vibration direction (Z) of the rest of the attachment element (16).

15. Method of making an anti-vibration device (40), comprising the following steps:
- introducing a damping unit (10) into a support (30) along an insertion direction (X), until a first attachment housing (39) of the support (30) and a second attachment housing (15) of the damping unit (10) are in line along a main vibration direction (Z),
- inserting a tool in the second attachment housing (15) so as to apply pressure on and to displace an attachment element (16) positioned in the second attachment housing (15), until the attachment element (16) is partially inserted in the first attachment housing (39) so as to block movement of the damping unit (10) relative to the support (30) along the insertion direction (X), **characterized in that** the attachment element (16) is held in place by a breakable retaining element (17) until pressure is applied on the attachment element (17), wherein the tool can break the breakable retaining element (17) to release the attachment element (16) so that it can be moved towards the first attachment housing (39).

16. Method of manufacturing an anti-vibration device (40) according to claim 15, comprising the step consisting of introducing the tool into a through hole (38) in line with the second attachment housing (15) along the main vibration direction (Z), so as to apply pressure on and to displace the attachment element (16) until the attachment element (16) is partially inserted in the first attachment housing (39) so as to block movement of the damping unit (10) relative to the support (30) along the insertion direction (X).

## Patentansprüche

1. Antivibrationsvorrichtung (40) für die Installation eines Motors an einer Fahrzeugkarosserie, umfassend eine Dämpfungseinheit (10) und einen Träger (30); wobei die Dämpfungseinheit (10) ein erstes Führungselement (12) umfasst, das zum Führen der Dämpfungseinheit (10) entlang einer Einführrichtung (X) in den Träger (30) ausgebildet ist, wobei die Dämpfungseinheit (10) zum Dämpfen von Vibrationen entlang mindestens einer Hauptvibrationsrichtung (Z) senkrecht zur Einführrichtung (X) ausgebildet ist; der Träger (30) ein erstes Befestigungsgehäuse (39) umfasst, das sich entlang der Hauptschwingungsrichtung (Z) erstreckt, wobei die Antivibrationsvorrichtung (40) mindestens ein Befestigungselement (16) umfasst, das zum Bewegen entlang der Hauptschwingungsrichtung (Z) in Richtung des ersten Befestigungsgehäuses (39) mit Hilfe eines Werkzeugs ausgebildet ist; wobei das erste Befestigungsgehäuse (39) zum Halten eines Teils des Befestigungselements (16) ausgebildet ist, um die Bewegung der Dämpfungseinheit (10) relativ zu dem Träger (30) entlang der Einführrichtung (X) zu blockieren, **dadurch gekennzeichnet, dass** das Befestigungselement (16) durch ein zerbrechliches Halteelement (17) an seinem Platz gehalten wird, bevor es durch das Werkzeug bewegt wird.

2. Antivibrationsvorrichtung (40) nach Anspruch 1, wobei die Dämpfungseinheit (10) mindestens ein zweites Befestigungsgehäuse (15) zum zumindest teilweisen Halten des Befestigungselements (16) umfasst.

3. Antivibrationsvorrichtung (40) nach Anspruch 2, wobei das Befestigungselement (16) frei zwischen einer Montageposition und einer Befestigungsposition bewegbar ist, wobei das Befestigungselement (16) in der Montageposition nur im zweiten Befestigungsgehäuse (15) angeordnet ist und das Befestigungselement (16) in der Befestigungsposition teilweise in dem einen und dem anderen des ersten Befestigungsgehäuses (39) und zweiten Befestigungsgehäuses (15) angeordnet ist.

4. Antivibrationsvorrichtung (40) nach einem der Ansprüche 1 und 3, wobei das Befestigungselement (16) ein Stift ist, der sich entlang der Hauptvibrationsrichtung (Z) erstreckt.

5. Antivibrationsvorrichtung (40) nach einem der Ansprüche 1 und 3, wobei der Abschnitt des Befestigungselements (16), der zum Einsetzen in das erste Befestigungsgehäuse (39) ausgebildet ist, durch Druck plastisch verformt wird, wenn er in das erste Befestigungsgehäuse (39) eingesetzt wird.

6. Antivibrationsvorrichtung (40) nach einem der Ansprüche 1 und 5, wobei der Träger (30) ein sich entlang der Hauptvibrationsrichtung (Z) erstreckendes Durchgangsloch (38) aufweist, durch das das Werkzeug eingeführt werden kann, um das Befestigungselement (16) zum ersten Befestigungsgehäuse (39) hin zu verschieben.

7. Antivibrationsvorrichtung (40) nach Anspruch 6, wobei das Befestigungsgehäuse (39) und das Durchgangsloch (38) entlang der Hauptvibrationsrichtung (Z) in einer Linie liegen.

8. Antivibrationsvorrichtung (40) nach einem der Ansprüche 2 bis 7, wobei das zweite Befestigungsgehäuse (15) einen oberen Abschnitt (15a), einen Zentrierabschnitt (15b) und einen Befestigungsabschnitt (15c) aufweist, die in dieser Reihenfolge entlang der Hauptvibrationsrichtung (Z) angeordnet sind.

9. Antivibrationsvorrichtung (40) nach Anspruch 8, wobei der obere Teil (15a) eine Abmessung senkrecht zur Hauptschwingungsrichtung (Z) aufweist, die größer als die Abmessung senkrecht zur Hauptschwingungsrichtung (Z) eines vorstehenden Teils (16a) des Befestigungselements (16) ist.

10. Antivibrationsvorrichtung (40) nach Anspruch 8 oder 9, wobei der Befestigungsabschnitt (15c) eine Abmessung senkrecht zur Hauptschwingungsrichtung (Z) aufweist, die kleiner als die Abmessung senkrecht zur Hauptschwingungsrichtung (Z) des vorstehenden Abschnitts (16a) des Befestigungselements (16) ist.

11. Dämpfungseinheit (10), die ein erstes Führungselement (12) zum Führen der Dämpfungseinheit (10) entlang einer Einführrichtung (X) in einem Träger (30) einer Antivibrationsvorrichtung (40) umfasst; wobei die Dämpfungseinheit (10) zum Dämpfen von Vibrationen entlang mindestens einer Hauptvibrationsrichtung (Z) senkrecht zur Einführrichtung (X) ausgebildet ist; wobei die Dämpfungseinheit (10) ein Befestigungselement (16) umfasst, das von einem zerbrechlichen Halteelement (17) gehalten wird, das zum Bewegen durch ein Werkzeug ausgebildet ist, um mit einem ersten Befestigungsgehäuse (39) des Trägers (30) zusammenzuwirken und eine Bewegung der Dämpfungseinheit (10) relativ zum Träger (30) entlang der Einführrichtung (X) zu blockieren, **dadurch gekennzeichnet, dass** das zerbrechliche Halteelement (17) durch mindestens einen zerbrechlichen Streifen oder durch mindestens zwei zerbrechliche Menisken (18) gebildet wird, die zum Befestigen des Befestigungselements (16) an einer Innenwand des zweiten Befestigungsgehäuses (15) ausgebildet sind.

12. Dämpfungseinheit (10) nach Anspruch 11, wobei das erste Führungselement (12) mindestens einen Schieber (13) aufweist, der sich entlang der Einführrichtung (X) im Wesentlichen senkrecht zur Haupteinführrichtung (X) erstreckt.

13. Dämpfungseinheit (10) nach einem der Ansprüche 11 oder 12, wobei das Befestigungselement (16), das zerbrechliche Rückhalteelement (17) und das erste Führungselement (12) in einem einzigen Formgebungsschritt zusammen geformt werden.

14. Dämpfungseinheit (10) nach einem der Ansprüche 11 bis 13, wobei das Befestigungselement (16) einen vorstehenden Abschnitt (16a) aufweist, dessen Abmessung senkrecht zur Hauptschwingungsrichtung (Z) größer als die Abmessung senkrecht zur Hauptschwingungsrichtung (Z) des restlichen Befestigungselements (16) ist.

15. Verfahren zur Herstellung einer Antivibrationsvorrichtung (40), das die folgenden Schritte umfasst:
- Einführen einer Dämpfungseinheit (10) in einen Träger (30) entlang einer Einführrichtung (X), bis ein erstes Befestigungsgehäuse (39) des Trägers (30) und ein zweites Befestigungsgehäuse (15) der Dämpfungseinheit (10) entlang einer Hauptschwingungsrichtung (Z) in einer Linie liegen,
- Einführen eines Werkzeugs in das zweite Befestigungsgehäuse (15), um Druck auf ein in dem zweiten Befestigungsgehäuse (15) positioniertes Befestigungselement (16) auszuüben und es zu verschieben, bis das Befestigungselement (16) teilweise in das erste Befestigungsgehäuse (39) eingeführt ist, um die Bewegung der Dämpfungseinheit (10) relativ zu dem Träger (30) entlang der Einführrichtung (X) zu blockieren,
**dadurch gekennzeichnet, dass** das Befestigungselement (16) durch ein zerbrechliches Halteelement (17) an seinem Platz gehalten wird, bis Druck auf das Befestigungselement (17) ausgeübt wird, wobei das Werkzeug das zerbrechliche Halteelement (17) zerbrechen kann, um das Befestigungselement (16) freizugeben, so dass es in Richtung des ersten Befestigungsgehäuses (39) bewegt werden kann.

16. Verfahren zur Herstellung einer Antivibrationsvorrichtung (40) nach Anspruch 15 umfassend den Schritt: Einführen des Werkzeugs in ein Durchgangsloch (38) in einer Linie mit dem zweiten Befestigungsgehäuse (15) entlang der Hauptvibrationsrichtung (Z), um Druck auf das Befestigungselement (16) auszuüben und es zu verschieben, bis das Befestigungselement (16) teilweise in das erste Befestigungsgehäuse (39) eingeführt ist, um die Bewegung der Dämpfungseinheit (10) relativ zum Träger (30) entlang der Einführungsrichtung (X) zu blockieren.

## Revendications

1. Dispositif anti-vibration (40) pour l'installation d'un moteur sur une carrosserie de véhicule, comprenant une unité d'amortissement (10) et un support (30) ; l'unité d'amortissement (10) comprenant un premier élément de guidage (12) configuré pour guider l'unité d'amortissement (10) le long d'une direction d'insertion (X) dans le support (30), l'unité d'amortissement (10) étant configurée pour amortir les vibrations le long d'au moins une direction de vibration principale (Z) perpendiculaire à la direction d'insertion (X) ; le support (30) comprenant un premier logement de fixation (39) s'étendant le long de la direction principale de vibration (Z), le dispositif anti-vibration (40) comprenant au moins un élément de fixation (16) configuré pour être déplacé le long de la direction principale de vibration (Z) vers le premier logement de fixation (39) en utilisant un outil ; le premier logement de fixation (39) étant configuré pour maintenir une partie de l'élément de fixation (16) de manière à bloquer le mouvement de l'unité d'amortissement (10) par rapport au support (30) le long de la direction d'insertion (X), **caractérisé en ce que** l'élément de fixation (16) est maintenu en place par un élément de retenue cassable (17) avant d'être déplacé par l'outil.

2. Dispositif anti-vibration (40) selon la revendication 1, dans lequel l'unité d'amortissement (10) comprend au moins un deuxième logement de fixation (15) configuré pour maintenir au moins partiellement l'élément de fixation (16).

3. Dispositif anti-vibration (40) selon la revendication 2, dans lequel l'élément de fixation (16) est libre de se déplacer entre une position d'assemblage et une position de fixation, l'élément de fixation (16) étant positionné uniquement dans le deuxième logement de fixation (15) en position d'assemblage et l'élément de fixation (16) étant positionné partiellement dans l'un et l'autre du premier logement de fixation (39) et du deuxième logement de fixation (15) en position de fixation.

4. Dispositif anti-vibration (40) selon l'une des revendications 1 et 3, dans lequel l'élément de fixation (16) est un axe s'étendant selon la direction principale de vibration (Z).

5. Dispositif anti-vibration (40) selon l'une des revendications 1 et 3, dans lequel la portion de l'élément de fixation (16) configurée pour être insérée dans le premier logement de fixation (39) est déformée plastiquement par pression lorsqu'elle est insérée dans le premier logement de fixation (39).

6. Dispositif anti-vibration (40) selon l'une des revendications 1 et 5, dans lequel le support (30) comprend un trou traversant (38) s'étendant selon la direction principale de vibration (Z) à travers lequel l'outil peut être inséré de manière à déplacer l'élément de fixation (16) vers le premier logement de fixation (39).

7. Dispositif anti-vibration (40) selon la revendication 6, dans lequel le logement de fixation (39) et le trou traversant (38) sont alignés le long de la direction principale de vibration (Z).

8. Dispositif anti-vibration (40) selon l'une quelconque des revendications 2 à 7, dans lequel le deuxième logement de fixation (15) comprend une partie supérieure (15a), une partie de centrage (15b) et une partie de fixation (15c), disposées dans cet ordre selon la direction principale de vibration (Z).

9. Dispositif anti-vibration (40) selon la revendication 8, dans lequel la partie supérieure (15a) a une dimension perpendiculaire à la direction de vibration principale (Z) supérieure à la dimension perpendiculaire à la direction de vibration principale (Z) d'une partie saillante (16a) de l'élément de fixation (16).

10. Dispositif anti-vibration (40) selon les revendications 8 ou 9, dans lequel la partie de fixation (15c) présente une dimension perpendiculaire à la direction principale de vibration (Z) inférieure à la dimension perpendiculaire à la direction principale de vibration (Z) de la partie saillante (16a) de l'élément de fixation (16).

11. Unité d'amortissement (10), comprenant un premier élément de guidage (12) configuré pour guider l'unité d'amortissement (10) le long d'une direction d'insertion (X) dans un support (30) d'un dispositif anti-vibration (40) ; l'unité d'amortissement (10) étant configurée pour amortir les vibrations le long d'au moins une direction de vibration principale (Z) perpendiculaire à la direction d'insertion (X) ; l'unité d'amortissement (10) comprenant un élément de fixation (16) maintenu en place par un élément de retenue cassable (17) configuré pour être déplacé par un outil de manière à coopérer avec un premier logement de fixation (39) du support (30) et à bloquer un mouvement de l'unité d'amortissement (10) par rapport au support (30) le long de la direction d'insertion (X), **caractérisé en ce que** l'élément de retenue cassable (17) est formé par au moins une bande cassable ou par au moins deux ménisques cassables (18), configurés pour fixer l'élément de fixation (16) à une paroi interne du deuxième logement de fixation (15).

12. Unité d'amortissement (10) selon la revendication 11, dans laquelle, le premier élément de guidage (12) comprend au moins une glissière (13) s'étendant le long de la direction d'insertion (X) sensiblement perpendiculairement à la direction d'insertion principale (X).

13. Unité d'amortissement (10) selon l'une quelconque des revendications 11 ou 12, dans laquelle, l'élément de fixation (16), l'élément de retenue cassable (17), et le premier élément de guidage (12) sont formés ensemble en une seule étape de moulage.

14. Unité d'amortissement (10) selon l'une quelconque des revendications 11 à 13, dans laquelle l'élément de fixation (16) comprend une partie saillante (16a) dont la dimension perpendiculaire à la direction principale de vibration (Z) est supérieure à une dimension perpendiculaire à la direction principale de vibration (Z) du reste de l'élément de fixation (16).

15. Procédé de fabrication d'un dispositif anti-vibration (40), comprenant les étapes suivantes :
- introduire une unité d'amortissement (10) dans un support (30) le long d'une direction d'insertion (X), jusqu'à ce qu'un premier logement de fixation (39) du support (30) et un second logement de fixation (15) de l'unité d'amortissement (10) soient alignés le long d'une direction de vibration principale (Z),
- insérer un outil dans le second logement de fixation (15) de manière à appliquer une pression sur et à déplacer un élément de fixation (16) positionné dans le second logement de fixation (15), jusqu'à ce que l'élément de fixation (16) soit partiellement inséré dans le premier logement de fixation (39) de manière à bloquer le mouvement de l'unité d'amortissement (10) par rapport au support (30) le long de la direction d'insertion (X), **caractérisé en ce que** l'élément de fixation (16) est maintenu en place par un élément de retenue cassable (17) jusqu'à ce qu'une pression soit appliquée sur l'élément de fixation (17), dans lequel l'outil peut briser l'élément de retenue cassable (17) pour libérer l'élément de fixation (16) de sorte qu'il puisse être déplacé vers le premier logement de fixation (39).

16. Procédé de fabrication d'un dispositif anti-vibration (40) selon la revendication 15, comprenant l'étape consistant à introduire l'outil dans un trou traversant (38) au droit du deuxième logement de fixation (15) selon la direction principale de vibration (Z), de manière à exercer une pression sur et à déplacer l'élément de fixation (16) jusqu'à ce que l'élément de fixation (16) soit partiellement inséré dans le premier logement de fixation (39) de manière à bloquer le mouvement de l'unité d'amortissement (10) par rapport au support (30) selon la direction d'insertion (X).
